# EUROPEAN PATENT SPECIFICATION

(11) **EP 3 283 295 B1**
(45) Date of publication and mention of the grant of the patent: **20.11.2019**
(21) Application number: 15820186.3
(22) Date of filing: 30.12.2015
(51) Int. Cl.: C08G 77/20, C09D 183/04

(54) **METHOD FOR PREPARING SILICONE-TREATED FILMS OF POLYETHYLENE TEREPHTHALATE (PET)**
VERFAHREN ZUR HERSTELLUNG VON SILIKONBEHANDELTEN FOLIEN AUS POLYETHYLENTEREPHTHALAT (PET)
PROCÉDÉ DE PRÉPARATION DE FILMS DE POLYÉTHYLÈNE TÉRÉPHTALATE (PET) TRAITÉS AU SILICONE

(30) Priority: 16.04.2015 IT MI20150550
(43) Date of publication of application: 21.02.2018
(73) Proprietor: Siliconature S.p.A., 31010 Godega di Sant'Urbano (IT)
(72) Inventor: DE ZAN, Lorenzo, 33077 Sacile (IT)
(74) Representative: Modiano, Micaela Nadia
(86) International application number: PCT/EP2015/081421
(87) International publication number: WO 2016/165796

(56) References cited:
- EP-A2- 0 769 540
- EP-A2- 0 811 668
- EP-A2- 0 864 415
- EP-A2- 1 174 246
- DATABASE WPI Week 200406 Thomson Scientific, London, GB; AN 2004-062028 XP002751246, & WO 03/099556 A1 (TEIJIN DUPONT FILMS JAPAN LTD) 4 December 2003 (2003-12-04)
- DATABASE WPI Week 200572 Thomson Scientific, London, GB; AN 2005-702456 XP002751247, & WO 2005/087493 A1 (MITSUBISHI KAGAKU POLYESTER FILM KK) 22 September 2005 (2005-09-22)

## Description

The present invention relates to a method for providing silicone-treated films of polyethylene terephthalate (PET). The silicone treatment of films of PET consists in a method whereby the films are spread with a silicone mixture in order to create a layer of silicone polymer which adheres to the surface of the films. Silicone-treated PET films are widely used in many fields of application, and in particular they act as a support for releasing adhesives of various types, such as labels and adhesive bands. In particular, silicone-treated films possess properties of controlled-release separation from the adhesives to which they are made to adhere, without altering the chemical-physical properties of the adhesives themselves.

Currently, the production of silicone-treated PET films occurs by way of two methods of extrusion: the "in-line" method, in which the spreading of the mixture of silicone compounds on the film occurs simultaneously with the actual extrusion of the film, and the "off-line" method, in which the spreading of the mixture of silicones on the film occurs at the end of the extrusion of the film.

In detail, the "in-line" production of silicone-treated PET films comprises the following steps:
(i) longitudinally stretching a casting of melted PET, in order to obtain a film stretched in a longitudinal direction;
(ii) cooling the film obtained in step (i) down to ambient temperature;
(iii) spreading a mixture of silicones on the film obtained in step (ii);
(iv) laterally stretching (at right angles to the direction of the longitudinal stretching) the film obtained in step (iii), in order to obtain a film stretched in the two directions;
(v) bringing the film obtained in step (iv) to temperatures comprised between 170°C and 280°C for a time comprised between 3 and 30 seconds;
(vi) cooling the film obtained in step (v) down to ambient temperature.

The "off-line" production of silicone-treated PET films comprises the following steps:
(i) longitudinally stretching a casting of melted PET, in order to obtain a film stretched in a longitudinal direction;
(ii) laterally stretching (at right angles to the direction of the longitudinal stretching) the film obtained in step (i), in order to obtain a film stretched in the two directions;
(iii) bringing the film obtained in step (ii) to temperatures comprised between 170°C and 280°C for a time comprised between 3 and 30 seconds;
(iv) cooling the film obtained in step (iii) down to ambient temperature;
(v) spreading a mixture of silicones on the film obtained in step (iv).

The step of heating the PET film to temperatures comprised between 170°C and 280°C for 3-30 seconds, carried out at the end of the lateral stretching both in the "in-line" method and in the "off-line" method, serves to enable the crystallization of the PET and its consequent thermal stabilization.

The "in-line" method is obviously more practical with respect to the "off-line" method, since carrying out the silicone treatment simultaneously with the extrusion of the PET film allows a better operating practicality, together with a saving of time.

Furthermore, the application of the silicone layer prior to the thermal stabilization of the PET film makes it possible to obtain a better adhesion of the silicone layer on the PET surface, and therefore a better resistance of the siliconized film.

For the production of silicone-treated PET films, both "in-line" and "off-line", the use is known of aqueous mixtures that comprise silicones, which are spread on the PET films.

However, aqueous mixtures suffer the disadvantage of poorly solubilizing silicones, which are hydrophobic molecules; in fact, only a few kinds of silicones are capable of solubilizing in an aqueous medium.

In order to mediate the hydrophobic nature of the silicones and the hydrophilic nature of the aqueous medium, it is known to add additives such as ionic or non-ionic surfactants and wetting agents to the silicone/aqueous mixtures, for example glycols and esters. These additives confer greater stability to the emulsion of silicones in an aqueous medium and they ensure a fair wettability and spreading of such emulsion onto PET films.

Such additives are therefore essential for the formulation of aqueous mixtures of silicones. However, owing to their chemical nature, such additives are incapable, completely or at least partially, of undergoing a polymerization that would reduce their chemical activity in the finished product.

Furthermore, since they are amphiphile molecules, the additives are chemically compatible both with the silicones, to which they bond with the apolar portions, and with the adhesives with which the silicone-treated PET films are coupled.

This causes the initiation of chemical interactions at the silicone-adhesive interface, which give rise to unwanted effects such as the anchoring of the adhesive to the layer of silicone and/or an increase in the force to release the silicone from the adhesive.

These effects cause an instability in the silicone-adhesive system, altering its chemical-physical properties over time.

On the other hand, since silicones are soluble in an apolar organic medium, the use of silicone mixtures based on apolar organic solvents appears to be evidently advantageous.

However, mixtures based on apolar organic solvents can only be used in the "off-line" method, since such solvents must not be present when the PET film is being subjected to lateral stretching.

In fact the presence of such solvents on the surface of the film, at the temperature at which the lateral stretching occurs (80-110°C), would create a serious risk of explosion.

For example, the document EP1174246 A discloses a process for in line production of bi-oriented silicone-coated release films. The silicone coating may be applied in any type of solvent, such as organic or water or even without solvent, i.e. solventless. The in line coating is followed by stretching and heating at high temperatures, e.g. at 230 °C whereby being affected by the disadvantages mentioned above particularly when organic solvents are used.

Therefore, the use of silicone mixtures based on apolar organic solvents is not currently possible for the "in-line" production of silicone-treated PET films, but is limited to the "off-line" production which, as noted previously, is more inconvenient and disadvantageous.

The aim of the present invention is therefore to devise a method of providing silicone-treated PET films which solves the above mentioned technical problems, while removing the drawbacks and overcoming the limitations of the known art.

Within this aim, an object of the invention is to devise a method of providing silicone-treated PET films with the "in-line" approach, using silicone mixtures based on apolar organic solvents.

Another object of the invention is to devise a method of providing silicone-treated PET films with the "in-line" approach, while preventing the risk of explosion linked to the presence of apolar organic solvents during the step of lateral stretching.

Another object of the present invention is to devise a method of providing silicone-treated PET films with the "in-line" approach, using materials with a chemical nature that is compatible with the silicones, so as to preserve the physical variability of the final product which is associated with the various types of silicones that can be used.

Another object of the invention is to devise a method of providing silicone-treated PET films with the "in-line" approach, in which the controlled-release separating effect can be modulated for adhesives of different chemical natures and compositions.

In essence, the present invention sets out to provide a method that combines the advantages of the "in-line" and "off-line" approaches, in particular the operating practicality of the first, and the possibility offered by the second of using silicone mixtures based on apolar organic solvents.

Another object of the invention is to provide a method that is highly reliable, easy to implement and low cost, and which makes use of the usual conventional systems.

This aim and these and other objects which will become better apparent hereinafter are achieved by a method for preparing silicone-treated films of polyethylene terephthalate (PET), in which the silicone treatment occurs simultaneously with the extrusion of the films, which comprises the steps of:
(i) longitudinal stretching of a casting of melted PET;
(ii) cooling to ambient temperature of the film obtained in step (i);
(iii) spreading, on the cooled film, a silicone mixture;
(iv) heating the PET film coated with the silicone mixture to a temperature comprised between 20°C and 70°C for a time comprised between 1 and 15 seconds;
(v) lateral stretching of the PET film obtained in step (iv);
(vi) heating of the film obtained in step (v) to temperatures comprised between 170°C and 280°C for a time comprised between 3 and 30 seconds;
(vii) cooling of the film obtained in step (vi) down to ambient temperature;
wherein the silicone mixture comprises:
(a) from 1% to 50% by weight on the total weight of the mixture, of one or more monomers and/or one or more silicone prepolymers;
(b) from 50% to 95% by weight on the total weight of the mixture, of one or more apolar organic solvents having a boiling point comprised between 50°C and 120 °C and a vapor pressure comprised between 2 and 30 kPa, measured at 20°C;
(c) from 0.1% to 5% by weight on the total weight of the mixture, of one or more cross-linking agents; and
(d) from 40 to 80 ppm of catalytic platinum (II), in which said catalytic platinum (II) is in complexed form.

In the present invention, the terms "silicone mixture", "mixture of silicones", and "mixture that comprises silicones" are used to mean a solution that comprises monomers and/or silicone prepolymers dissolved in one or more apolar organic solvents.

On the other hand, with reference to the known art, the term "aqueous mixture" is used to mean a solution that comprises monomers and/or silicone prepolymers dissolved in an aqueous medium.

In the context of the present invention, furthermore, the terms "longitudinal stretching" (or "MDO stretching") and "lateral stretching" (or "TDO stretching" or "transverse stretching") are used with the meaning commonly attributed to them and known to the person skilled in the art; the longitudinal direction and the lateral (or transverse) direction are perpendicular to each other.

Further characteristics and advantages of the invention will become better apparent from the detailed description that follows of a preferred, but not exclusive, embodiment of the method according to the invention and of the silicone mixture used for the silicone treatment of PET films.

As mentioned, the silicone mixture used in the method of the invention comprises:
(a) one or more monomers and/or one or more silicone prepolymers;
(b) one or more apolar organic solvents having a boiling point comprised between 50°C and 120°C and a vapor pressure comprised between 2 and 30 kPa, measured at 20°C;
(c) one or more cross-linking agents; and
(d) catalytic platinum (II) in complexed form.

As mentioned previously, the use of apolar organic solvents makes it possible to dissolve silicones (in the form of monomers and/or silicone prepolymers) of different chemical natures.

By way of example, among the silicones that can be used in the invention we can cite poly-methyl-siloxanes, poly-dimethyl-siloxanes and multiples thereof, having side chains of length comprised between 1 and 10 carbon atoms, preferably comprised between 1 and 6 carbon atoms.

It is further preferable to use silicones that have one or more vinyl groups on the side chains.

In a preferred embodiment of the present invention, the monomers and/or silicone prepolymers can be present in the silicone mixture in a quantity comprised between 5% and 30% by weight on the total weight of the mixture.

More preferably, the monomers and/or silicone prepolymers can be present in the silicone mixture in a quantity comprised between 10% and 25% by weight on the total weight of the mixture.

The monomers and/or the silicone prepolymers polymerize in situ on the PET film, forming a layer of silicone polymer, adhering to the PET surface.

The polymerization occurs by way of an addition reaction, in which, as is known, the vinyl end groups present in varying numbers on the monomers and/or silicone prepolymers bond the SiH groups present on the chains of the cross-linking agents.

The cross-linking agents (commonly also known as "cross-linkers") are molecules capable of forming bonds between different linear chains of the silicones (or between different points of the same chain), with the formation of a polymer having a "net" structure.

The nature of the cross-linking agents, which is variable based on the type of monomers and/or silicone prepolymers used, is known to the skilled person in the silicone polymers sector.

As examples of cross-linking agents, we can cite methylsilane and multiple structures thereof.

In an embodiment of the invention, it is possible to use poorly-reactive cross-linkers, i.e., as is known to the person skilled in the art, cross-linkers having a high percentage content of poorly-accessible SiH groups; examples of such cross-linking agents are those available commercially under the names Wacker® V24 or Wacker® V88.

In a preferred embodiment of the invention, the cross-linking agents can be present in the silicone mixture in a total quantity comprised between 0.5% and 2.5% by weight on the total weight of the mixture.

The apolar organic solvents present in the mixture used in the invention are selected from among those having a boiling point comprised between 50°C and 120°C and vapor pressure comprised between 2 and 30 kPa, measured at 20°C.

In a preferred embodiment, such apolar organic solvents can be selected independently from the group constituted by aromatic hydrocarbons having from 6 to 15 carbon atoms, preferably from 6 to 10 carbon atoms, linear or branched chain alkanes having from 6 to 15 carbon atoms, preferably from 6 to 10 carbon atoms, linear or branched chain ketones having from 3 to 6 carbon atoms, preferably from 3 to 4 carbon atoms, and mixtures thereof.

In a preferred embodiment, the apolar organic solvent can be heptane. In another preferred embodiment, the apolar organic solvent can be methyl-ethyl-ketone.

In another preferred embodiment, the apolar organic solvent can be a mixture of heptane and methyl-ethyl-ketone.

In a preferred embodiment of the invention, the apolar organic solvents can be present in the silicone mixture in a total quantity comprised between 70% and 90% by weight on the total weight of the mixture.

According to the method of the invention, after the step of spreading the silicone mixture, the PET film is subjected to a temperature comprised between 20°C and 70°C for a time comprised between 1 and 15 seconds.

Under these conditions of temperature and time, the apolar organic solvents evaporate from the silicone mixture spread on the PET film, in so doing preventing hazardous explosions from occurring in the subsequent step of lateral stretching, which is carried out at temperatures comprised between 80°C and 110°C.

The role of the catalytic platinum (II) in complexed form present in the silicone mixture is to act as a catalyst of the addition reaction that leads to the polymerization of the silicones.

The platinum (II) is active in the catalysis; however, it carries out its action in complexed form, since the complexes make it stable in the mixture.

Therefore, in the context of the present invention the term "catalyst" is used to refer to platinum (II) in complexed form, i.e. to complexes of platinum (II).

Furthermore, it should be understood that the quantities of platinum (II) indicated in ppm refer to catalytic platinum (II), i.e. to the active form, without taking account of complexes.

Preferably, the complexes of platinum (II) can be selected from among those which are soluble in the solvents used in the mixture.

Preferably, furthermore, such complexes of platinum (II) can be selected from those free of amines and sulfides.

Complexes of platinum (II) are inactive at temperatures lower than 50°C, while they carry out their catalytic activity at temperatures comprised between 50°C and 120°C.

Catalytic platinum (II) can preferably be present in the silicone mixture (in the form of complexes, as explained previously) in quantities comprised between 40 ppm and 60 ppm.

More preferably, it can be present in the silicone mixture in a quantity equal to 60 ppm.

In an embodiment of the present invention, the silicone mixture can further comprise one or more inhibitors of the catalytic platinum (II) in complexed form, in a total quantity equal to or lower than 20% by weight on the total weight of the silicone mixture.

The presence of inhibitors of complexes of the platinum (II) offers another advantage on the practical level, by contributing to preventing the polymerization of the monomers and/or silicone prepolymers until the end of the lateral stretching step.

In fact, the heating of the PET film coated with the silicone mixture to the temperature of 80-110°C in order to provide the lateral stretching activates the complexes of platinum (II), thus starting the polymerization reaction.

However, it is advisable to prevent the polymerization from occurring before the lateral stretching, in order to prevent the mechanical action of tensioning the PET film from causing the breakage of the layer of polymerized, and therefore rigid, silicone stuck to the surface of the film.

Such breakages in fact would leave surface areas of the PET film not covered by silicone and therefore not active in the release of adhesives, which is the task for which the film is intended.

In order to overcome this problem, it is possible to use reduced quantities of catalytic platinum (II) (not greater than 80 ppm) in the silicone mixture, or add inhibitors of complexes of platinum (II) to the silicone mixture.

Inhibitors of complexes of platinum (II) are molecules which are capable of interacting with such complexes, rendering them nonreactive to reagents and therefore inactive in polymerization.

In the presence of such inhibitors, therefore, the polymerization of silicones is substantially inhibited.

The inhibitors used in the silicone mixture have the characteristic of evaporating at temperatures comprised between 100°C and 110°C.

Therefore, at the temperatures envisaged for the lateral stretching (80-110°C), the inhibitors begin to evaporate, leaving the mixture and leaving the complexes of platinum (II) in active form: under such conditions the polymerization reaction is started.

In a preferred embodiment, the inhibitors of complexes of platinum (II) can be present in the silicone mixture in a total quantity that is equal to or lower than 10% by weight on the total weight of the silicone mixture. In an even more preferred embodiment, such inhibitors can be present in the silicone mixture in a total quantity that is equal to or lower than 5% by weight on the total weight of the silicone mixture.

In another preferred embodiment, the inhibitors used in the present invention can be organic acid esters, more preferably maleate esters.

When the silicone mixture comprises the one or more inhibitors of complexes of platinum (II), the total quantity of catalytic platinum (II) present in the mixture can be increased, up to a maximum of 120 ppm.

As mentioned, the alternative to the addition of the inhibitors of complexes of platinum (II) in the silicone mixture is the use of a quantity of catalytic platinum (II) not greater than 80 ppm.

In an embodiment in which the silicone mixture does not comprise inhibitors of complexes of platinum (II), in addition to using catalytic platinum (II) in a quantity not exceeding 80 ppm, it is possible to use poorly-reactive cross-linkers, such as Wacker® V24 or Wacker® V88.

In a preferred embodiment, it is possible to use the Wacker® V24 cross-linker with a quantity of catalytic platinum (II) of 65 ppm at most.

In another preferred embodiment, it is possible to use the Wacker® V88 cross-linker with a quantity of catalytic platinum (II) of 60 ppm at most, more preferably of 50 ppm at most.

In both of the cases described, both in the presence and in the absence of the inhibitors of complexes of platinum (II), the quantities of catalytic platinum (II) used in the present invention are lower than those commonly used in the state of the art in order to obtain a complete polymerization of the monomers and/or silicone prepolymers (i.e. 100-150 ppm, typically 120 ppm).

This depends on the fact that complete polymerization of the silicones occurs in the step of thermal stabilization of the PET, in which the operating temperatures are comprised between 170°C and 280°C.

Since high temperatures, as is known, increase the speed of the polymerization reaction, the quantity of catalyst used can be reduced, with consequent advantage in terms of savings.

In addition to the components cited and discussed above, the silicone mixture can also optionally comprise one or more adhesion promoters, i.e. molecules capable of modifying the separation capacity of the silicone after the polymerization.

The adhesion promoters used in the invention are silicone additives such as, for example, methoxy-siloxanes, methoxy-silanes, functionalized silanes, acetyl-siloxanes and mixtures thereof.

In a preferred embodiment of the invention, the adhesion promoters can be present in the silicone mixture in a quantity equal to or lower than 5% by weight on the total weight of the mixture. More preferably, the adhesion promoters can be present in the silicone mixture in a quantity equal to or lower than 2.5% by weight on the total weight of the mixture.

Summing up, therefore, the method of the invention is comprised in the following steps:
(i) longitudinal stretching of a casting of melted PET: at the end of this step a film is obtained that has been stretched in the longitudinal direction;
(ii) cooling to ambient temperature of the longitudinally-stretched film obtained in step (i);
(iii) spreading, on the cooled film, a silicone mixture that comprises: (a) one or more monomers and/or one or more silicone prepolymers, (b) one or more apolar organic solvents having a boiling point comprised between 50°C and 120°C and a vapor pressure comprised between 2 and 30 kPa, measured at 20°C, (c) one or more cross-linking agents, (d) catalytic platinum (II) in complexed form;
(iv) heating the PET film coated with the silicone mixture to a temperature comprised between 20°C and 70°C for a time comprised between 1 and 15 seconds: this step removes the apolar organic solvents before the lateral stretching, which requires temperatures at which such solvents could explode;
(v) lateral stretching (perpendicular to the longitudinal stretching): at the end of this step a siliconized film is obtained that has been stretched both in the longitudinal direction and in the lateral direction. During this step the catalysts are activated;
(vi) bringing the film obtained in step (iv) to temperatures comprised between 170°C and 280°C for a time comprised between 3 and 30 seconds: in this step the polymerization of the silicones is completed and, simultaneously, the PET crystallizes, becoming thermally stable;
(vii) cooling the thermally stabilized film to ambient temperature.

Although some particular applications of silicone-treated films can require a spreading of silicone mixture in a quantity comprised between 0.15 and 10 g/m² of film, usually the silicone mixture is spread on the surface of the longitudinally-stretched PET film in a quantity comprised between 4 and 6 g/m² of film. The spreading of such quantity of fresh mixture would obtain a maximum basis weight of the layer of silicones after drying which is comprised between 0.3 and 1.2 g/m² of film.

However, the lateral stretching entails a transverse lengthening of the film, with respect to the original dimensions, of approximately 3.3 times and a reduction of approximately 3.3 times both of the thickness of the PET film, and of the thickness of the applied layer of silicones.

Therefore, the maximum basis weight of the layer of silicones on the end product, after the lateral stretching, is comprised between 0.1 and 0.4 g/m² of film.

The method of the invention can be carried out using the systems commonly known and used in the state of the art for the extrusion of PET films and spreading them with silicone mixtures: for example, the spreading of the silicone mixture can be carried out with a rotogravure cylinder, with a specific volume of the spreading cylinder comprised between 6 and 30 g/cm³, preferably comprised between 6 and 15.5 g/cm³, and even more preferably comprised between 8.5 and 15.5 g/cm³.

In practice it has been found that the method of the invention fully achieves the set aim and objects. In particular, the method of the invention makes it possible to prepare "in-line" silicone-treated PET films having different chemical-physical properties according to the nature of the silicones used, an important characteristic in order to obtain the desired controlled release for each type of adhesive.

This result is obtained thanks to the use of apolar organic solvents in the silicone mixture, which are capable of solubilizing silicones (in the form of monomers and/or silicone prepolymers) of different chemical types (therefore having different chemical-physical properties).

In turn, the use of apolar organic solvents is made possible by the provision of a step of heating the PET film coated with the silicone mixture to a temperature of 20-70°C for a time comprised between 1 and 15 seconds, combined with a suitable choice of apolar organic solvents having a boiling point comprised between 50°C and 120°C and a vapor pressure comprised between 2 and 30 kPa, measured at 20°C.

Furthermore, the method of the present invention is advantageous in that, by carrying out the silicone treatment "in-line", it ensures that the step of silicone treatment occurs prior to the step of lateral stretching (therefore prior to the thermal stabilization of the film).

The fact that the film is subjected to thermal stabilization after having been siliconized ensures a better anchoring of the layer of silicones to the PET surface.

In addition, since the lateral stretching triples the lateral dimensions of the film, applying the silicone mixture on the film prior to such step (which is what occurs in the "in-line" approach) offers an undoubted advantage in terms of rapidity and ease of application, in that it makes it possible to work on a smaller support.

The method, thus conceived, is susceptible of numerous modifications and variations, all of which are within the scope of the appended claims. Moreover, all the details may be substituted by other, equivalent elements, the correspondence of which is known to the person skilled in the art.

### EXAMPLES:

Hereinafter two examples are given of the "in-line" silicone treatment method according to the invention.

| **Characteristics of the method** | **Example 1** | **Example 2** |
|---|---|---|
| Spreading system | Rotogravure cylinder | Rotogravure cylinder |
| Specific volume of spreading cylinder | 9 g/cm³ | 9 g/cm³ |
| Line speed | 200 m/min | 200 m/min |
| Rotogravure speed | 200/250 m/min | 200/200 m/min |
| Type of rotation of spreading cylinder | Same direction of rotation with respect to the direction of travel of the film | Same direction of rotation with respect to the direction of travel of the film |
| Surface treatment of the film prior to the spreading | Corona treatment | Corona treatment |

| **Characteristics of the silicone mixture** | **Example 1** | **Example 2** |
|---|---|---|
| Heptane | 30 kg | 40 kg |
| Isopropyl alcohol | 2 kg | 2 kg |
| Methyl-ethyl-ketone | 6 kg | 8 kg |
| Adhesion promoter Wacker® Dehesive® 953 | 18.1 kg | 18.1 kg |
| Adhesion promoter HF 86 | 0.2 kg | 0.2 kg |
| Wacker® V88 cross-linker | 0.095 kg | 0.095 kg |
| Complex of platinum (II) Wacker® Catalyst OL | 0.060 kg | 0.046 kg |
| Inhibitor of complex of platinum (II) (ethoxy-propyl-maleate) | 0.09 kg | 0 kg |
| Dry (with respect to the solvents) | 17.8% p/p | 14.7% p/p |
| Catalytic platinum (II) (active) | 66 ppm | 50 ppm |
| Basis weight of the fresh deposit of silicone mixture | 4.10 g/m² | 3.88 g/m² |
| Basis weight of the dry silicone layer | 0.73 g/m² | 0.57 g/m² |

The two formulations given for the purposes of example for the silicone mixture have the chemical-physical characteristics described in the text of the present application.

The cross-linker (of the Wacker® V88 type) has an active content of SiH groups comprised between 1.2 and 1.45 and averagely fast reaction kinetics in linking the vinyl groups present on the monomers and/or silicone prepolymers.

The concentration of catalytic platinum (II) is decidedly lower than the 120 ppm normally used during standard polymerization reactions.

Furthermore the spreading system with rotogravure cylinder makes it possible to apply a silicone later on the longitudinally-stretched PET film, the basis weight of which after drying (i.e. dry) is comprised between 0.5 and 0.8 g/m².

Once the lateral stretching has also been done, the resulting PET film will have a coating of silicone the basis weight of which is comprised between 0.15 and 0.3 g/m², ideal values for the applications for which silicone-treated films prepared with the method of the invention are intended.

For a siliconized PET film to possess stable separating capabilities from adhesive supports, the silicone layer must in fact have a thickness comprised between 0.05 and 0.5 g/m².

## Claims

1. A method for preparing silicone-treated films of polyethylene terephthalate (PET), in which the silicone treatment occurs simultaneously with the extrusion of the films, which comprises the steps of:
(i) longitudinal stretching of a casting of melted PET;
(ii) cooling to ambient temperature of the film obtained in step (i);
(iii) spreading, on the cooled film, a silicone mixture;
(iv) heating the PET film coated with the silicone mixture to a temperature comprised between 20°C and 70°C for a time comprised between 1 and 15 seconds;
(v) lateral stretching of the PET film obtained in step (iv);
(vi) heating of the film obtained in step (v) to temperatures comprised between 170°C and 280°C for a time comprised between 3 and 30 seconds;
(vii) cooling of the film obtained in step (vi) down to ambient temperature;
wherein the silicone mixture comprises:
(a) from 1% to 50% by weight on the total weight of the mixture, of one or more monomers and/or one or more silicone prepolymers;
(b) from 50% to 95% by weight on the total weight of the mixture, of one or more apolar organic solvents having a boiling point comprised between 50°C and 120 °C and a vapor pressure comprised between 2 and 30 kPa, measured at 20°C;
(c) from 0.1% to 5% by weight on the total weight of the mixture, of one or more cross-linking agents; and
(d) from 40 to 80 ppm of catalytic platinum (II), in which said catalytic platinum (II) is in complexed form.

2. The method according to claim 1, wherein the one or more monomers and/or one or more silicone prepolymers present in the silicone mixture are selected independently from the group constituted by methyl-siloxanes, dimethyl-siloxanes and multiples thereof, with side chains of length comprised between 1 and 10 carbon atoms, and mixtures thereof.

3. The method according to claim 1 or 2, wherein the one or more monomers and/or one or more silicone prepolymers present in the silicone mixture have one or more vinyl groups on the side chains.

4. The method according to one or more of the preceding claims, wherein the one or more apolar organic solvents having a boiling point comprised between 50°C and 120°C and a vapor pressure comprised between 2 and 30 kPa, measured at 20°C, present in the silicone mixture are selected independently from the group constituted by aromatic hydrocarbons having from 6 to 15 carbon atoms, linear or branched chain alkanes having from 6 to 15 carbon atoms, linear or branched chain ketones having from 3 to 6 carbon atoms, and mixtures thereof.

5. The method according to claim 4, wherein the apolar organic solvent having a boiling point comprised between 50°C and 120°C and a vapor pressure comprised between 2 and 30 kPa, measured at 20°C, present in the silicone mixture is selected from the group constituted by heptane, methyl-ethyl-ketone, and a mixture of heptane and methyl-ethyl-ketone.

6. The method according to one or more of the preceding claims, wherein the one or more monomers and/or the one or more silicone prepolymers are present in the silicone mixture in a total quantity comprised between 5% and 30% by weight on the total weight of the mixture.

7. The method according to one or more of the preceding claims, wherein the one or more apolar organic solvents having a boiling point comprised between 50°C and 120°C and a vapor pressure comprised between 2 and 30 kPa, measured at 20°C, are present in the silicone mixture in a total quantity comprised between 70% and 90% by weight on the total weight of the mixture.

8. The method according to one or more of the preceding claims, wherein the one or more cross-linking agents are present in the silicone mixture in a total quantity comprised between 0.5% and 2.5% by weight on the total weight of the mixture.

9. The method according to one or more of the preceding claims, wherein the silicone mixture comprises further one or more inhibitors of catalytic platinum (II) in complexed form, in a total quantity equal to or lower than 20% by weight on the total weight of the mixture.

10. The method according to claim 9, wherein the one or more inhibitors of catalytic platinum (II) in complexed form are present in the silicone mixture in a total quantity equal to or lower than 10% by weight on the total weight of the mixture.

11. The method according to claim 9 or claim 10, wherein the one or more inhibitors of catalytic platinum (II) in complexed form are selected independently from the group constituted by organic acid esters.

12. The method according to one or more of claims 9 to 11, wherein the silicone mixture comprises catalytic platinum (II) in complexed form up to a maximum of 120 ppm.

13. The method according to one or more of the preceding claims, wherein the silicone mixture comprises further one or more adhesion promoters.

14. The method according to claim 13, wherein the one or more adhesion promoters are silicone additives selected independently from the group constituted by methoxy-siloxanes, methoxy-silanes, functionalized silanes, acetyl-siloxanes and mixtures thereof.

15. The method according to claim 13 or claim 14, wherein the adhesion promoters are present in the silicone mixture in a total quantity equal to or lower than 5% by weight on the total weight of the mixture.

## Patentansprüche

1. Ein Verfahren zur Herstellung Silikon-behandelter Folien aus Polyethylenterephthalat (PET), wobei die Silikonbehandlung gleichzeitig mit der Extrusion der Folien stattfindet, folgende Schritte umfassend:
(i) Längsdehnen eines Gussteils aus geschmolzenem PET;
(ii) Kühlen der in Schritt (i) hergestellten Folie auf Umgebungstemperatur;
(iii) Verteilen einer Silikonmischung auf der gekühlten Folie;
(iv) Erhitzen der mit der Silikonmischung beschichteten PET-Folie auf eine Temperatur zwischen 20°C und 70°C über einen Zeitraum zwischen 1 und 15 Sekunden;
(v) Seitliches Dehnen der PET-Folie die in Schritt (iv) hergestellt wurde;
(vi) Erhitzen der in Schritt (v) hergestellten Folie auf Temperaturen zwischen 170°C und 280°C über einen Zeitraum von 3 und 30 Sekunden;
(vii) Abkühlen der in Schritt (vi) hergestellten Folie auf Umgebungstemperatur;
wobei die Silikonmischung Folgendes umfasst:
(a) 1 bis 50 Gewichtsprozent, basierend auf dem Gesamtgewicht der Mischung, eines oder mehrerer Monomere und/oder eines oder mehrerer Silikonprepolymere;
(b) 50 bis 95 Gewichtsprozent basierend auf dem Gesamtgewicht der Mischung eines oder mehrerer apolarer organischer Lösungsmittel mit einem Siedepunkt zwischen 50°C und 120°C und einem Dampfdruck zwischen 2 und 30 kPa gemessen bei 20°C;
(c) 0,1 bis 5 Gewichtsprozent basierend auf dem Gesamtgewicht der Mischung eines oder mehrerer Quervernetzungsmittel; und
(d) 40 bis 80 ppm von katalytischem Platin (II), wobei das katalytische Platin (II) in Komplexform vorliegt.

2. Das Verfahren gemäß Anspruch 1, wobei die einen oder mehreren Monomere und/oder die einen oder mehreren Silikonprepolymere in der Silikonmischung unabhängig aus der Gruppe gewählt sind, die aus Methyl-Siloxanen, Dimethyl-Siloxanen und Vielfachen davon besteht mit Seitenketten mit einer Länge zwischen 1 und 10 Kohlenstoffatomen und Mischungen davon.

3. Das Verfahren gemäß Anspruch 1 oder 2, wobei die einen oder mehreren Monomere und/oder die einen oder mehreren Silikonprepolymere in der Silikonmischung eine oder mehrere Vinylgruppen an den Seitenketten haben.

4. Das Verfahren gemäß einem oder mehreren der obigen Ansprüche, wobei die einen oder mehreren apolaren organischen Lösungsmittel die einen Siedepunkt zwischen 50°C und 120°C und einem Dampfdruck zwischen 2 und 30 kPa gemessen bei 20°C haben, und in der Silikonmischung vorliegen, unabhängig gewählt sind aus der Gruppe bestehend aus aromatischen Kohlenwasserstoffen mit 6 bis 15 Kohlenstoffatomen, Alkanen mit linearen oder verzweigten Ketten und 6 bis 15 Kohlenstoffatomen Ketonen mit linearen oder verzweigten Ketten und 3 bis 6 Kohlenstoffatomen und Mischungen davon.

5. Das Verfahren gemäß Anspruch 4, wobei das apolare organische Lösungsmittel, das einen Siedepunkt zwischen 50°C und 120°C und einen Dampfdruck zwischen 2 und 30 kPa, gemessen bei 20°C hat und in der Silikonmischung vorliegt, gewählt ist aus der Gruppe bestehend aus Heptan, Methyl-Ethyl-Keton und einer Mischung aus Heptan und Methyl-Ethyl-Keton.

6. Das Verfahren gemäß einem oder mehreren der obigen Ansprüche, wobei die einen oder mehreren Monomere und/oder die einen oder mehreren Silikonprepolymere in der Silikonmischung in einer Gesamtmenge vorliegen, die zwischen 5 und 30 Gewichtsprozent des Gesamtgewichts der Mischung beträgt.

7. Das Verfahren gemäß einem oder mehreren der obigen Ansprüche, wobei die einen oder mehreren apolaren organischen Lösungsmittel die einen Siedepunkt zwischen 50°C und 120°C und einen Dampfdruck zwischen 2 und 30 kPA gemessen bei 20°C haben, in der Silikonmischung in einer Gesamtmenge zwischen 70 und 90 Gewichtsprozent des Gesamtgewichts der Mischung vorliegen.

8. Das Verfahren gemäß einem oder mehreren der obigen Ansprüche, wobei die einen oder mehreren Quervernetzungsmittel in der Silikonmischung in einer Gesamtmenge zwischen 0,5 und 2,5 Gewichtsprozent des Gesamtgewichts der Mischung vorliegen.

9. Das Verfahren gemäß einem oder mehreren der obigen Ansprüche, wobei die Silikonmischung weiter einen oder mehrere Inhibitoren von katalytischem Platin (II) in Komplexform, in einer Gesamtmenge von höchstens 20% des Gesamtgewichts der Mischung umfasst.

10. Das Verfahren gemäß Anspruch 9, wobei die einen oder mehreren Inhibitoren von katalytischem Platin (II) in Komplexform in der Silikonmischung in einer Gesamtmenge von höchstens 10 Gewichtsprozent des Gesamtgewichts der Mischung vorliegen.

11. Das Verfahren gemäß Anspruch 9 oder Anspruch 10, wobei die einen oder mehreren Inhibitoren von katalytischem Platin (II) in Komplexform unabhängig aus der Gruppe gewählt sind, die aus organischen Säureestern besteht.

12. Das Verfahren gemäß einem oder mehreren der Ansprüche 9 bis 11, wobei die Silikonmischung katalytisches Platin (II) in Komplexform bis zu einem Maximum von 120 ppm umfasst.

13. Das Verfahren gemäß einem oder mehreren der obigen Ansprüche, wobei die Silikonmischung weiter einen oder mehrere Adhäsionsbeschleuniger umfasst.

14. Das Verfahren gemäß Anspruch 13, wobei die einen oder mehreren Adhäsionbeschleuniger Silikonzusatzstoffe sind, die unabhängig gewählt sind aus der Gruppe bestehend aus Methoxy-Siloxanen, Methoxy-Silanen, funktionalisierten Silanen, Acetyl-Siloxanen und Mischungen davon.

15. Das Verfahren gemäß Anspruch 13 oder Anspruch 14, wobei die Adhäsionbeschleuniger in der Silikonmischung in einer Gesamtmenge von höchstens 5 Gewichtsprozent des Gesamtgewichts der Mischung vorliegen.

## Revendications

1. Procédé de préparation de films de polyéthylène téréphtalate (PET) traités à la silicone, dans lequel le traitement à la silicone se produit simultanément à l'extrusion des films, qui comporte les étapes consistant à :
(i) étirer longitudinalement une pièce moulée en PET fondu,
(ii) refroidir jusqu'à température ambiante le film obtenu à l'étape (i),
(iii) étaler, sur le film refroidi, un mélange de silicone,
(iv) chauffer le film de PET revêtu du mélange de silicone jusqu'à une température comprise entre 20 °C et 70 °C pendant une durée comprise entre 1 et 15 secondes,
(v) étirer latéralement le film en PET obtenu à l'étape (iv),
(vi) chauffer le film obtenu à l'étape (v) jusqu'à des températures comprises entre 170 °C et 280 °C pendant une durée comprise entre 3 et 30 secondes,
(vii) refroidir le film obtenu à l'étape (vi) jusqu'à la température ambiante,
dans lequel le mélange de silicone comporte :
(a) de 1 % à 50 % en poids sur le poids total du mélange, d'un ou plusieurs monomères et/ou d'un ou plusieurs prépolymères de silicone,
(b) de 50 % à 95 % en poids sur le poids total du mélange, d'un ou plusieurs solvants organiques apolaires ayant un point d'ébullition compris entre 50 °C et 120 °C et une pression de vapeur comprise entre 2 et 30 kPa, mesurée à 20 °C,
(c) de 0,1 % à 5 % en poids sur le poids total du mélange, d'un ou plusieurs agents de réticulation, et
(d) de 40 à 80 ppm de platine catalytique (II), dans lequel ledit platine catalytique (II) se présente sous une forme complexée.

2. Procédé selon la revendication 1, dans lequel le ou les monomères et/ou le ou les prépolymères de silicone présents dans le mélange de silicone sont choisis indépendamment parmi le groupe constitué de méthyl-siloxanes, de diméthyl-siloxanes et de multiples de ceux-ci, avec des chaînes latérales de longueur comprise entre 1 et 10 atomes de carbone, et des mélanges de ceux-ci.

3. Procédé selon la revendication 1 ou 2, dans lequel le ou les monomères et/ou le ou les prépolymères de silicone présents dans le mélange de silicone ont un ou plusieurs groupes vinyle sur les chaînes latérales.

4. Procédé selon une ou plusieurs des revendications précédentes, dans lequel le ou les solvants organiques apolaires ayant un point d'ébullition compris entre 50 °C et 120 °C et une pression de vapeur comprise entre 2 et 30 kPa, mesurée à 20 °C, présents dans le mélange de silicone sont choisis indépendamment parmi le groupe constitué d'hydrocarbures aromatiques possédant de 6 à 15 atomes de carbone, d'alcanes à chaîne linéaire ou ramifiée possédant de 6 à 15 atomes de carbone, de cétones à chaîne linéaire ou ramifiée possédant de 3 à 6 atomes de carbone, et de mélanges de ceux-ci.

5. Procédé selon la revendication 4, dans lequel le solvant organique apolaire ayant un point d'ébullition compris entre 50 °C et 120 °C et une pression de vapeur comprise entre 2 et 30 kPa, mesurée à 20 °C, présents dans le mélange de silicone est choisi parmi le groupe constitué d'heptane, de méthyl-éthyl-cétone et d'un mélange d'heptane et de méthyl-éthyl-cétone.

6. Procédé selon une ou plusieurs des revendications précédentes, dans lequel le ou les monomères et/ou le ou les prépolymères de silicone sont présents dans le mélange de silicone en une quantité totale comprise entre 5 % et 30 % en poids sur le poids total du mélange.

7. Procédé selon une ou plusieurs des revendications précédentes, dans lequel le ou les solvants organiques apolaires ayant un point d'ébullition compris entre 50 °C et 120 °C et une pression de vapeur comprise entre 2 et 30 kPa, mesurée à 20 °C, sont présents dans le mélange de silicone en une quantité totale comprise entre 70 % et 90 % en poids sur le poids total du mélange.

8. Procédé selon une ou plusieurs des revendications précédentes, dans lequel le ou les agents de réticulation sont présents dans le mélange de silicone en une quantité totale comprise entre 0,5 % et 2,5 % en poids sur le poids total du mélange.

9. Procédé selon une ou plusieurs des revendications précédentes, dans lequel le mélange de silicone comporte en outre un ou plusieurs inhibiteurs du platine catalytique (II) sous forme complexée, en une quantité totale égale ou inférieure à 20 % en poids sur le poids total du mélange.

10. Procédé selon la revendication 9, dans lequel le ou les inhibiteurs du platine catalytique (II) sous forme complexée sont présents dans le mélange de silicone en une quantité totale égale ou inférieure à 10 % en poids sur le poids total du mélange.

11. Procédé selon la revendication 9 ou la revendication 10, dans lequel le ou les inhibiteurs du platine catalytique (II) sous forme complexée sont choisis indépendamment parmi le groupe constitué d'esters d'acide organique.

12. Procédé selon une ou plusieurs des revendications 9 à 11, dans lequel le mélange de silicone comporte du platine catalytique (II) sous forme complexée jusqu'à un maximum de 120 ppm.

13. Procédé selon une ou plusieurs des revendications précédentes, dans lequel le mélange de silicone comporte en outre un ou plusieurs promoteurs d'adhérence.

14. Procédé selon la revendication 13, dans lequel le ou les promoteurs d'adhérence sont des additifs à base de silicone choisis indépendamment parmi le groupe constitué de méthoxy-siloxanes, de méthoxy-silanes, de silanes fonctionnalisés, d'acétyl-siloxanes et de mélanges de ceux-ci.

15. Procédé selon la revendication 13 ou la revendication 14, dans lequel les promoteurs d'adhérence sont présents dans le mélange de silicone en une quantité totale égale ou inférieure à 5 % en poids sur le poids total du mélange.
